# EUROPÄISCHE PATENTSCHRIFT

(11) **EP 1 887 221 B1**
(45) Veröffentlichungstag und Bekanntmachung des Hinweises auf die Patenterteilung: **16.04.2014**
(21) Anmeldenummer: 07011264.4
(22) Anmeldetag: 08.06.2007
(51) Int. Cl.: F03D 7/02, F03D 11/00

(54) **Windkraftanlage sowie Rotorblattverstellantrieb**
Wind turbine and blade pitch angle adjustment device therefor
Eolienne et dispositif de réglage du pas de l'hélice pour éolienne

(30) Priorität: 10.08.2006 DE 202006012314 U
(43) Veröffentlichungstag der Anmeldung: 13.02.2008
(73) Patentinhaber: Liebherr-Components Biberach GmbH, 88400 Biberach/Riß (DE)
(72) Erfinder: Mollhagen, Klaus-Peter, 87700 Memmingen (DE)
(74) Vertreter: Thoma, Michael

(56) Entgegenhaltungen:
- DE-A1- 19 720 025
- US-A1- 2006 083 615

## Beschreibung

Die vorliegende Erfindung betrifft eine Windkraftanlage mit einem Rotor, der an einer Rotornarbe verstellbar gelagerte Rotorblätter aufweist. Die Erfindung betrifft dabei insbesondere einen Rotorblattverstellantrieb zur Verstellung des Anstellwinkels der Rotorblätter einer solchen Windkraftanlage, mit einem Antriebsstrang, der ausgangsseitig mit dem Rotorblatt und/oder einem das Rotorblatt tragenden Lagerteil verbindbar ist, sowie einem mit dem Antriebsstrang verbindbaren Federspeicher, der eine Federspeicherwelle, ein Federspeichergehäuse sowie eine Federeinrichtung aufweist, die durch Verdrehen von Federspeicherwelle und Federspeichergehäuse relativ zueinander spannbar ist, wobei die Federspeicherwelle und/oder das Federspeichergehäuse zum Vorspannen der Federeinrichtung vom Antriebsstrang abkuppelbar und gegenüber diesem drehbar ist.

In Windkraftanlagen wird zur Regelung der Leistung üblicherweise eine Verstellung der Rotorblätter eingesetzt, wie dies die Schriften DE 197 20 025 A1 oder US 2006/0083615 A1 zeigen. Dabei können die einzelnen Rotorblätter über große Lager drehbar mit der Rotornarbe verbunden sein, so dass die Rotorblätter um ihre Längsachse gedreht und damit in ihrem Anstellwinkel eingestellt werden können. Zur Verstellung der Rotorblätter werden größtenteils elektrische Antriebsmotoren verwendet, die über ein Getriebe und ein Abtriebsritzel den drehbaren Ring des Rotorblattlagers und damit die Rotorblätter selbst verstellen.

Tritt in der elektrischen Versorgung der Antriebsmotoren eine Unterbrechung oder eine sonstige Störung der Antriebsmotoren ein, müssen aus Sicherheitsgründen die Rotorblätter in eine gefahrlose Position gebracht werden. In vielen Fällen sind hierzu elektrische Batterien vorgesehen, um eine Notversorgung der Antriebsmotoren zu erreichen. Andererseits wurden bereits mechanische Federspeicher vorgeschlagen, um in den genannten Fällen aus Sicherheitsgründen die Rückstellung der Rotorblätter in eine Neutralstellung zu bewirken. Damit diese mechanischen Federspeicher das Verstellen der Rotorblätter bewirken können, ist vor der Inbetriebnahme ein Vorspannen der Federn der Federspeicher erforderlich. Hierzu wurde vorgeschlagen, die innenliegende Federspeicherwelle vom Antriebsstrang abzukuppeln und mit einem geeigneten Werkzeug zu drehen, bis die gewünschte Vorspannung erreicht ist. nach dem Aufbringen der Vorspannung wird die Federspeicherwelle mittels einer Kupplung mit dem Antriebsstrang des Rotorblattverstellantriebs verbunden. Während des genannten Aufziehvorgangs besteht jedoch eine erhebliche Gefahr darin, dass die Federn des Federspeichers bei unsachgemäßer Handhabung unkontrolliert zurückschlagen und den Bediener mit dem Aufziehwerkzeug verletzen.

Der vorliegenden Erfindung liegt hiervon ausgehend die Aufgabe zugrunde, eine verbesserte Windkraftanlage der genannten Art sowie einen verbesserten Rotorblattverstellantrieb hierfür zu schaffen, die Nachteile des Standes der Technik vermeiden und letzteren in vorteilhafterweise weiterbilden. Insbesondere soll ein einfach zu bedienender Federspeicher geschaffen werden, der ohne Verletzungsgefahr vorgespannt werden kann und ein unkontrolliertes Zurückschlagen bei unsachgemäßer Handhabung ausschließt.

Erfindungsgemäß wird diese Aufgabe durch einen Rotorblattverstellantrieb gem. Anspruch 1 sowie eine Windkraftanlage gem. Anspruch 19 gelöst. Bevorzugte Ausgestaltung der Erfindungen sind Gegenstand der abhängigen Ansprüche.

Es wird also vorgeschlagen, das beim Vorspannen des Federspeichers gelöste Federspeicherbauteil gegen ein Zurückschlagen durch die entstehende Federkraft zu sichern und der auf dieses gelöste Bauteil nach und nach einwirkenden Federkraft beim Vorspannen einen hemmenden Widerstand entgegenzusetzen. Erfindungsgemäß ist eine Bremsvorrichtung vorgesehen, die die Federspeicherwelle und/oder das Federspeichergehäuse im abgekuppelten Zustand beim Vorspannen des Federspeichers entgegen der dabei entstehenden Federvorspannung abbremst und/oder hält. Die Bremsvorrichtung hemmt also eine unkontrollierte Rückstellung der Federspeicherwelle und/oder des Federspeichergehäuses, die bei vom Antriebsstrang gelösten Federspeichergehäuse bzw. gelöster Federspeicherwelle entstehen würde, wenn beispielsweise das Aufziehwerkzeug abrutschen würde.

In Weiterbildung der Erfindung ist dabei der Federspeicher vorzugsweise derart ausgebildet, dass die Federeinrichtung bei eingekuppelter Federspeicherwelle spannbar ausgebildet ist. Insbesondere kann im Gegensatz zum Stand der Technik vorgesehen sein, dass zum Spannen der Federeinrichtung nicht mehr die Federspeicherwelle, sondern das Federspeichergehäuse vom Antriebsstrang abgekuppelt und gedreht wird. In Weiterbildung der Erfindung ist hierzu das Federspeichergehäuse durch ein Drehlager an einem Antriebsstrangträgerteil drehbar gelagert, wobei vorzugsweise lösbare Arretiermittel zur Arretierung des Federspeichergehäuses in zumindest einer vorbestimmten Drehstellung gegenüber dem Antriebsstrangträger vorgesehen sind. Durch das Aufziehen des Federspeichers über eine Bewegung des Federspeichergehäuses kann eine beträchtliche Vereinfachung und Erhöhung der Sicherheit beim Aufziehvorgang erreicht werden, gegebenenfalls auch bereits ohne Verwendung der oben genannten Bremsvorrichtung. Das Federspeichergehäuse besitzt gegenüber der Federspeicherwelle einen größeren Hebel beim Aufziehen der Federeinrichtung, wodurch der Aufziehvorgang mit kleineren Kräften bewerkstelligt werden kann. Zum anderen besitzt das Federspeichergehäuse in der Regel eine günstigere Angriffsfläche, um eine geeignete Vorrichtung zum Aufziehen anzusetzen.

Ist das Federspeichergehäuse in der genannten Weise gegenüber dem Antriebsstrangträger verdrehbar, ist in Weiterbildung der Erfindung die Bremsvorrichtung vorteilhafterweise zwischen dem Federspeichergehäuse und dem Antriebsstrangträger vorgesehen. Die Bremsvorrichtung hält das Federspeichergehäuse am Antriebsstrangträger bzw. bremst das Federspeichergehäuse gegenüber diesem, wenn die Arretierung des Federspeichergehäuses zum Zwecke des Aufziehens gelöst ist.

Insbesondere ist die Bremsvorrichtung dabei derart ausgebildet, dass sie die entstehende Spannkraft der Federeinrichtung beim Aufziehen sicher hält, andererseits aber die Brems- bzw. Hemmkraft der Bremse von den Aufziehstellkräften überwunden werden kann. Die Bremsvorrichtung stellt eine Bremskraft bereit, die größer ist als eine Vorspannkraft der Federeinrichtung und kleiner ist als eine vorgehbare Betätigungskraft zur Vorspannung des Federspeichers. Die Bremsvorrichtung kann hierbei grundsätzlich verschieden ausgebildet sein, beispielsweise könnte eine magnetische, vorzugsweise permanentmagnetische Bremse vorgesehen sein. Eine bevorzugte Ausführung der Erfindung besteht allerdings darin, dass die Bremsvorrichtung als Reibbremse, insbesondere als eine federvorgespannte Reibbremse ausgebildet ist.

Um eine geschützte und gleichzeitig kleinbauende Anordnung zu erreichen, kann in Weiterbildung der Erfindung das Federspeichergehäuse vorzugsweise stirnseitig auf einem mit dem Antriebsstrangträger verbundenen Drehlagerkranz sitzen, wobei vorteilhafterweise die Bremsvorrichtung radial innerhalb des genannten Drehlagerkranzes angeordnet ist. Die Bremsvorrichtung greift hierbei vorteilhafterweise einerseits an dem Drehlagerkranz und andererseits an dem Federspeichergehäuse an. Die Bremsvorrichtung kann hierzu entsprechende Bremsenteile aufweisen, von denen eines an dem genannten Drehlagerkranz und eines am Federspeichergehäuse befestigt ist.

Die Bremsvorrichtung kann in Weiterbildung der Erfindung eine im Wesentlichen konstante Bremskraft bereitstellen. Alternativ hierzu kann die Bremsvorrichtung auch eine Einstellvorrichtung zur Einstellung der Bremskraft aufweisen, um in der gewünschten Weise einerseits beim Aufziehen des Federspeichers das Federspeichergehäuse entgegen der entstehenden Vorspannung zu erhalten, andererseits jedoch das Aufziehen selbst zu erlauben. Ist die Bremsvorrichtung in der genannten Weise als federvorgespannte Reibbremse ausgebildet, kann beispielsweise mittels einer Einstellschraube die Federspannung einstellbar sein. Grundsätzlich gilt jedoch, dass eine Bremsvorrichtung mit konstanter, voreingestellter Bremskraft ausreichend ist.

Um den Aufziehvorgang zu erleichtern, ist in Weiterbildung der Erfindung eine Antriebseinrichtung zum rotatorischen Antreiben des Federspeichergehäuses gegenüber dem Antriebsstrang vorgesehen. Jedoch braucht zum Aufziehen des Federspeichers lediglich der Federspeicher rotatorisch gelöst werden, so dass er verdreht werden kann. Die Drehbewegung selbst wird dann von der Antriebsvorrichtung bewerkstelligt.

Die Antriebseinrichtung ist hierzu insbesondere als Drehantrieb ausgebildet. Dieser Drehantrieb kann an dem Antriebsstrangträger gelagert sein, gegenüber dem das Federspeichergehäuse verdrehbar ist. Der Drehantrieb kann ein Antriebsrad aufweisen, welches mit dem Federspeichergehäuse in Engriff bringbar ist.

Damit der Aufziehvorgang im zulässigen Bereich bleibt, ist in Weiterbildung der Erfindung zur Kontrolle eine Drehwinkel- und/oder Drehzahlerfassungseinrichtung zur Erfassung der Verdrehung des Federspeichergehäuses im entkuppelten Zustand vorgesehen. Die Drehwinkel- und/oder Drehzahlerfassungseinrichtung kann dabei einen Zähler bilden, der vorteilhafterweise unrückstellbar ausgebildet ist, so dass er immer den Aufziehzustand des Federspeichers anzeigt. Dies ist auch für das umgekehrte Entspannen des Federspeichers beispielsweise im Reparaturfall von Bedeutung. In Weiterbildung der Erfindung kann die Drehwinkel- und/oder Drehzahlerfassungseinrichtung auch dazu benutzt werden, den vorgenannten Aufziehantrieb zu steuern, beispielsweise dahingehend, dass dieser bei Erreichen des maximal zugelassenen Aufziehzustandes gesperrt oder abgeschaltet wird.

Der Federspeicher kann grundsätzlich an verschiedener Stelle des Antriebsstranges angeordnet bzw. mit diesem gekoppelt sein. Der Antriebsstrang selbst kann grundsätzlich einen vorzugsweise elektrischen Antriebsmotor sowie ein mit dem Antriebsmotor verbundenes Getriebe aufweisen, wobei vorteilhafterweise der Federspeicher mit einem Getriebeelement, insbesondere einer Getriebewelle des genannten Getriebes kuppelbar ist. Die Anordnung der Antriebsstrangkomponenten kann hierzu grundsätzlich verschieden gewählt sein. Eine vorteilhafte Ausführung kann darin bestehen, dass der Antriebsmotor quer zu der genannten Getriebewelle des Getriebes angeordnet und mit dieser beispielsweise über eine Kegelradverzahnung in Eingriff steht. Bei dieser quer ausgerichteten Anordnung des Antriebsmotors kann der Federspeicher vorteilhafterweise mit seiner Federspeicherwelle parallel, vorzugsweise koaxial zu der Getriebewelle angeordnet sein. Die genannte Getriebewelle kann hierbei ein Antriebselement antreiben, das mit dem zugehörigen Rotorblatt bzw. einem das Rotorblatt tragendem Lagerteil in Eingriff bringbar ist.

In Weiterbildung der Erfindung kann zwischen der Federspeicherwelle und dem vorgenannten Getriebe, insbesondere dessen Getriebewelle eine ausrückbare Kupplung vorgesehen sein, durch die die Federspeicherwelle abgekuppelt werden kann, beispielsweise um im Reparaturfall den Federspeicher gänzlich von dem Rotorblattverstellantrieb abkuppeln zu können.

Die vorliegende Erfindung wird nachfolgend anhand eines bevorzugten Ausführungsbeispieles unter zugehörigen Zeichnungen näher erläutert. Die Zeichnungen zeigen:

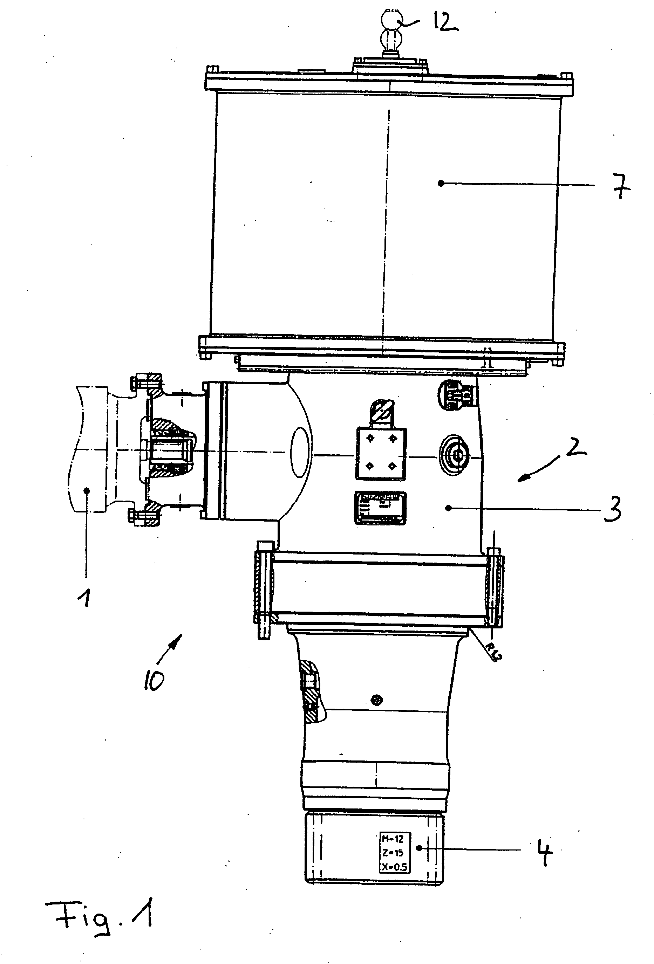

- Fig. 1:: Eine schematische Gesamtansicht des Rotorblattverstellantriebs einer Windkraftanlage nach einer bevorzugten Ausführung der Erfindung,
- Fig. 2:: eine Schnittdarstellung des Rotorblattverstellantriebs aus Fig. 1, und
- Fig. 3:: eine vergrößerte Schnittansicht der Schnittstelle zwischen dem Federspeicher und dem Getriebe des Rotorblattverstellantriebs aus den vorhergehenden Figuren.

Der in den Figuren gezeigte Rotorblattverstellantrieb 1 umfasst einen nur schematisch dargestellten Antriebsmotor 1, der ein Elektromotor sein kann und Teil eines Antriebsstranges 2 ist, der ein dem Antriebsmotor 1 nachgeschaltetes Getriebe 3 aufweist. Der Antriebsmotor 1 treibt dabei mit seiner Abtriebswelle ein Eingangselement des Getriebes 3 an, das ausgangsseitig ein Abtriebsritzel 4 antreibt, welches das Rotorblatt einer nicht näher gezeigten Windkraftanlage dreht. Das genannte Abtriebsritzel 4 kann hierzu insbesondere mit dem drehbaren Kranz eines Großlagers in Eingriff stehen, an dem das Rotorblatt befestigt ist.

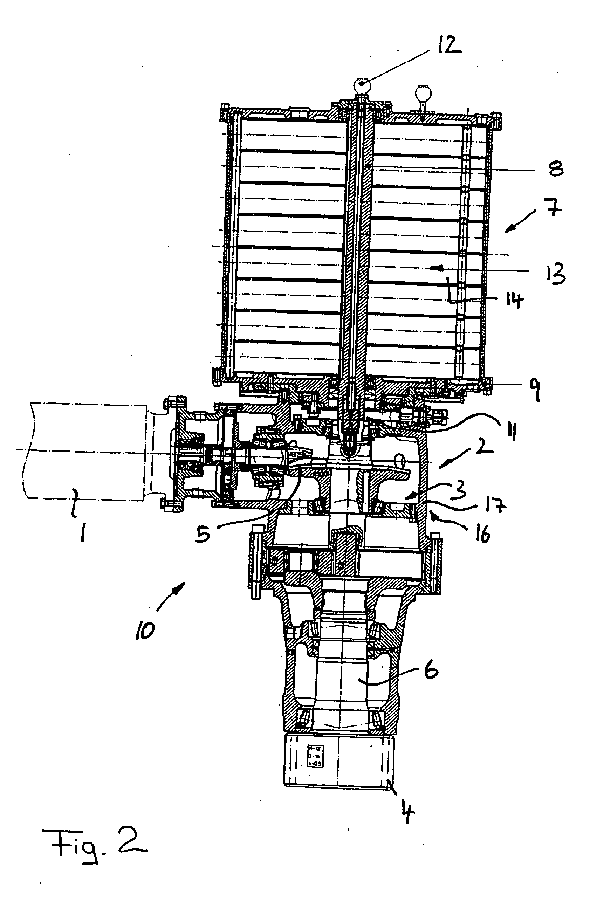

Wie Fig. 2 zeigt, ist das Getriebe 3 in der gezeichneten Ausführung als Winkelgetriebe ausgebildet, bei dem sich die Eingangsachse quer zur Ausgangsachse erstreckt. Der Antriebsmotor 1 treibt über eine Kegelradstufe 5 eine sich quer zur Drehachse des Antriebsmotors 1 erstreckende Getriebewelle 6 an, auf der das vorgenannte Abtriebsritzel 4 sitzt.

Weiterhin ist mit dem Antriebsstrang 2 ein Federspeicher 7 verbunden, der in der gezeichneten Ausführung an einer dem Abtriebsritzel 4 gegenüberliegenden Stirnseite des Getriebes 3 sitzt. Der Federspeicher umfasst dabei, wie Fig. 2 zeigt, eine zentrale Federspeicherwelle 8, die in einem Federspeichergehäuse 9 bzw. einem Federspeicherträger drehbar gelagert ist und sich in der gezeichneten Ausführungsform koaxial zu der vorgenannten Getriebewelle 6 erstreckt und mit dieser drehfest kuppelbar ist. Hierzu ist zwischen der Federspeicherwelle 8 und der Getriebewelle 6 eine ausrückbare Kupplung 11 vorgesehen, die in der gezeichneten Ausführung durch eine Axialausnehmung in der Federspeicherwelle 8 hindurch von einem Betätiger 12 am gegenüberliegenden Ende der Federspeicherwelle 8 betätigbar ist. Das mit einem Getriebegehäuse 17 kuppelbare Federspeichergehäuse 9 ist in der gezeichneten Ausführung geschlossen ausgebildet und besitzt eine im Wesentlichen zylindrische Gestalt. Es versteht sich jedoch, dass das Federspeichergehäuse 10 nicht zwangsweise ein geschlossenes Gehäuse bilden muss, sondern gegebenenfalls auch offen ausgebildet sein kann bzw. lediglich einen Federspeicherträger bilden kann. Bevorzugt ist jedoch die gezeigte geschlossene Ausbildung.

Zwischen der Federspeicherwelle 8 und dem Federspeichergehäuse 9 ist eine Federeinrichtung 13 in Form mehrerer Spiralfedern 14 vorgesehen. Durch Verdrehen von Federspeicherwelle 8 und Federspeichergehäuse 9 relativ zueinander, kann die genannte Federeinrichtung 13 aufgezogen werden, so dass die abgestützt an dem Federspeichergehäuse 9 ein Drehmoment auf der Federspeicherwelle 8 oder umgekehrt erzeugt.

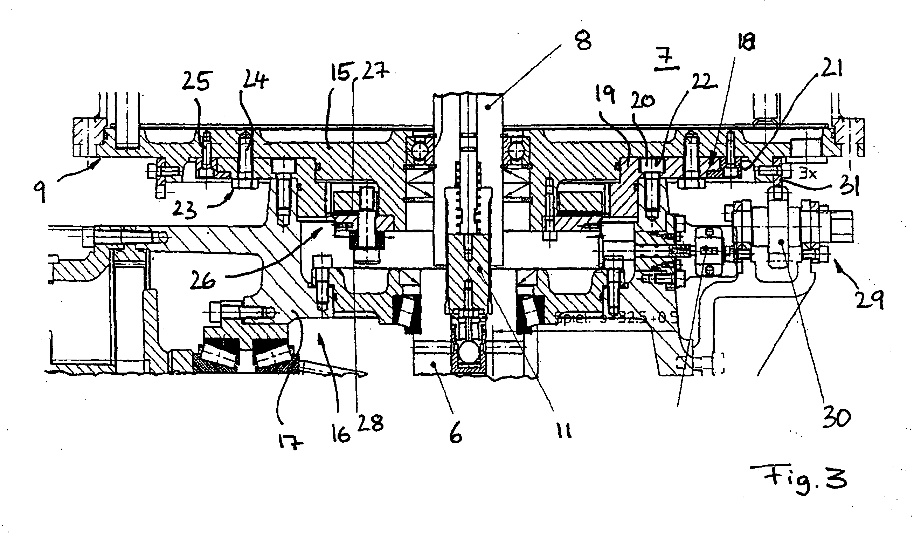

Wie Fig. 3 zeigt, sitzt das Federspeichergehäuse 9 mit einem stirnseitigen Anschlussabschnitt 15 auf einem Antriebstrangträger 16, der in der gezeichneten Ausführung von einem stirnseitigen Anschlussabschnitt des Getriebegehäuses 17 gebildet wird. Das Federspeichergehäuse 9 ist dabei drehbar an dem Getriebegehäuse 17 gelagert, und zwar um eine zur Federspeicherwelle 8 koaxiale Achse. Das hierfür vorgesehene Drehlager 18 umfasst in der gezeichneten Ausführung einen Drehlagerkranz 19, der durch Schrauben 20 fest an dem stirnseitigen Anschlussabschnitt des Getriebegehäuses 17 befestigt ist. Mit dem genannten Drehlagerkranz 19 wirkt ein Drehlagerkranz 21 zusammen, der an dem Federspeichergehäuse 9 befestigt ist. Zudem ist der Drehlagerkranz 19 in einer entsprechenden Ausnehmung 22 in dem stirnseitigen Anschlussabschnitt 15 des Federspeichergehäuses 9 angeordnet und abgestützt, wo er von dem ihn übergreifenden Drehlagerkranz 21 gehalten wird.

Der genannte getriebefeste Drehlagerkranz 19 kann dabei durch lösbare Arretiermittel 23 in Form von Schraubbolzen 24 an dem Federspeichergehäuse 9 rotatorisch arretiert werden. Um das Federspeichergehäuse 9 gegenüber dem Getriebegehäuse 17 drehen zu können, werden die genannten Schraubbolzen 24 entfernt; zudem kann es gegebenenfalls notwendig werden, den Drehlagerkranz 21 durch Lockern der ihn haltenden Schrauben 25 zu lockern.

Um ein unkontrolliertes Zurückschlagen des Federspeichergehäuses 9 bei gelöster Drehlagerung zu verhindern, ist zwischen dem Federspeichergehäuse 9 und dem Getriebegehäuse 17 eine Bremsvorrichtung 26 vorgesehen, die in der gezeichneten Ausführung radial innerhalb des getriebefesten Drehlagerkranzes 19 angeordnet ist und ein federspeichergehäusefestes Bremsteil und ein getriebegehäuse- bzw. drehlagerkranzfestes Bremsteil aufweist. In der gezeichneten Ausführung ist die Bremsvorrichtung 26 als Reibebremse ausgebildet. Eine Bremsscheibe 27 bzw. Bremslamellen läuft dabei zwischen zwei Bremsbacken, die durch eine Bremsenfedereinrichtung 28 vorgespannt sind. Die Bremsvorrichtung 26 ist dabei so dimensioniert, dass sie einerseits die von den Spiralfedern 14 aufgebrachten Vorspannkräfte halten kann, andererseits jedoch ein Aufziehen des Federspeichers 7 durch Verdrehen des Federspeichergehäuses 9 mit einer vorbestimmten Aufziehkraft zulässt.

Zum Aufziehen des Federspeichers 7 ist ein Aufziehantrieb 29 vorgesehen, der an dem Getriebegehäuse 17 gelagert ist und ein Antriebsrad 30 aufweist, welches mit einem Zahnkranz 31 am Federspeichergehäuse 9 kämmt, um das Federspeichergehäuse 9 entsprechend zu verdrehen. Der Aufziehantrieb 29 kann beispielsweise mittels einer aufsteckbaren Handkurbel betätigt werden. Gegebenenfalls kann jedoch auch eine fremdenergiebetätigbare Antriebseinheit beispielsweise in Form eines Elektromotors vorgesehen sein.

Um die jeweils eingestellte Aufziehstellung des Federspeichers 7 zu erfassen, ist eine Drehstellungserfassungseinrichtung 32 vorgesehen, die dem Aufziehantrieb 29 zugeordnet sein kann, jedoch nach einer alternativen Ausführung der Erfindung auch unmittelbar die Drehstellung des Federspeichergehäuses 9 erfassen kann. Die Drehstellungserfassungseinrichtung 32 ist dabei vorteilhafterweise als Zähler 33 ausgebildet, der die jeweilige Drehstellung anzeigt und die Umdrehungen zählt. Vorteilhafterweise ist der genannte Zähler 33 nicht rückstellbar, so dass er stets den aktuellen Aufziehzustand des Federspeichers 7 angibt, was einerseits ein Überspannen des Federspeichers 7 vermeidet und andererseits auch für das Rückstellen des Federspeichers 7 von Bedeutung ist.

## Patentansprüche

1. Rotorblattverstellantrieb zur Verstellung des Anstellwinkels eines Rotorblatts einer Windkraftanlage, mit einem Antriebsstrang (2) der ausgangsseitig mit dem Rotorblatt und/oder einem das Rotorblatt tragenden Lagerteil verbindbar ist, sowie einem mit dem Antriebsstrang (2) verbindbaren Federspeicher (7), der eine Federspeicherwelle (8), ein Federspeichergehäuse (9) sowie eine Federeinrichtung (13) aufweist, die durch Verdrehen von Federspeicherwelle (8) und Federspeichergehäuse (9) relativ zueinander spannbar ist, wobei die Federspeicherwelle (8) und/oder das Federspeichergehäuse (9) zum Vorspannen des Federspeichers (7) vom Antriebsstrang (2) abkuppelbar und gegenüber diesem drehbar ist, **dadurch gekennzeichnet, dass** eine Bremsvorrichtung (26) zum Abbremsen und/oder Halten der Federspeicherwelle (8) und/oder des Federspeichergehäuses (9) entgegen der Federvorspannung im abgekuppelten Zustand des Federspeichers (7) vorgesehen ist.

2. Rotorblattverstellantrieb nach dem vorhergehenden Anspruch, wobei der Federspeicher (7) bei eingekuppelter Federspeicherwelle spannbar ausgebildet, insbesondere durch Betätigung des Federspeichergehäuses (9) spannbar ist.

3. Rotorblattverstellantrieb nach einem der vorhergehenden Ansprüche, wobei das Federspeichergehäuse (9) durch ein Drehlager (18) an einem Antriebsstrangträger (16) drehbar gelagert ist.

4. Rotorblattverstellantrieb nach dem vorhergehenden Anspruch, wobei lösbare Arretiermittel (23) zur Arretierung des Federspeichergehäuses (9) in zumindest einer vorbestimmten Drehstellung gegenüber dem Antriebsstrangträger (16) vorgesehen sind.

5. Rotorblattverstellantrieb nach einem der beiden vorhergehenden Ansprüche, wobei die Bremsvorrichtung (26) zwischen dem Federspeichergehäuse (9) und dem Antriebsstrangträger (16) vorgesehen ist.

6. Rotorblattverstellantrieb nach dem vorhergehenden Anspruch, wobei das Federspeichergehäuse (9) vorzugsweise stirnseitig auf einem Drehlagerkranz (19) sitzt und die Bremsvorrichtung (26) radial innerhalb des Drehlagerkranzes (19) angeordnet ist, insbesondere an dem Drehlagerkranz (19) und dem Federspeichergehäuse (9) angreift.

7. Rotorblattverstellantrieb nach einem der vorhergehenden Ansprüche, wobei die Bremsvorrichtung (26) eine Bremskraft bereitstellt, die größer als eine Vorspannkraft der Federeinrichtung (13) und kleiner als eine vorgebbare Aufziehkraft zum Aufziehen des Federspeichers (7) ist.

8. Rotorblattverstellantrieb nach einem der vorhergehenden Ansprüche, wobei die Bremsvorrichtung (26) als Reibbremse, insbesondere federvorgespannte Reibbremse, ausgebildet ist.

9. Rotorblattverstellantrieb nach einem der vorhergehenden Ansprüche, wobei ein Aufziehantrieb (21) zum Aufziehen des Federspeichers (7) vorgesehen ist.

10. Rotorblattverstellantrieb nach dem vorhergehenden Anspruch, wobei der Aufziehantrieb (21) eine Antriebseinrichtung zum rotatorischen Antreiben des Federspeichergehäuses (9) gegenüber dem Antriebsstrang (2) aufweist.

11. Rotorblattverstellantrieb nach dem vorhergehenden Anspruch, wobei die Antriebseinrichtung als Drehantrieb ausgebildet ist, der an dem Antriebsstrangträger (2) gelagert ist und ein mit dem Federspeichergehäuse (9) in Eingriff bringbares Antriebsrad (30) aufweist.

12. Rotorbfattverstellantrieb nach einem der vorhergehenden Ansprüche, wobei eine Aufzieh-Zustandsüberwachungseinrichtung zur Überwachung des Aufziehzustandes des Federspeichers (7) vorgesehen ist.

13. Rotorblattverstellantrieb nach dem vorhergehenden Anspruch, wobei die Aufzieh-Zustandsüberwachungseinrichtung eine Drehwinkel- und/oder Drehzahlerfassungseinrichtung (32) zur Erfassung der Drehstellung des Federspeichergehäuses (9) aufweist.

14. Rotorblattverstellantrieb nach einem der beiden vorhergehenden Ansprüche, wobei die Aufzieh-Zustandsüberwachungseinrichtung unrückstellbar ausgebildet ist.

15. Rotorblattverstellantrieb nach einem der vorhergehenden Ansprüche, wobei der Antriebsstrang (2) einen Antriebsmotor (1) sowie ein mit dem Antriebsmotor (1) verbindbares Getriebe (3) aufweist, wobei der Federspeicher (7) mit einem Getriebeelement, insbesondere einer Getriebewelle (6) des Getriebes (3) kuppelbar ist.

16. Rotorblattverstellantrieb nach dem vorhergehenden Anspruch, wobei der Antriebsmotor (1) quer zu einer Getriebewelle (6) des Getriebes (3) angeordnet ist und der Federspeicher (7) mit seiner Federspeicherwelle (8) parallel, vorzugsweise koaxial zu der Getriebewelle (6) angeordnet ist.

17. Rotorblattverstellantrieb nach dem vorhergehenden Anspruch, wobei die Getriebewelle (6) ein Abtriebselement aufweist, das mit dem Rotorblatt und/oder dem das Rotorblatt tragenden Lagerteil in Eingriff bringbar ist.

18. Rotorblattverstellantrieb nach einem der vorhergehenden Ansprüche, wobei eine ausrückbare Kupplung (11) zwischen der Federspeicherwelle (8) und dem Antriebsstrang (2) vorgesehen ist.

19. Windkraftanlage mit einem Rotorblattverstellantrieb nach einem der vorhergehenden Ansprüche.

## Claims

1. A rotor blade adjusting drive for adjusting the pitch angle of a rotor blade of a wind power plant, comprising a drive train (2) which at the output end is connectable with the rotor blade and/or a bearing member supporting the rotor blade, and a spring accumulator (7) connectable with the drive train (2), which includes a spring accumulator shaft (8), a spring accumulator housing (9) and a spring means (13) which can be tensioned by rotating spring accumulator shaft (8) and spring accumulator housing (9) relative to each other, wherein the spring accumulator shaft (8) and/or the spring accumulator housing (9) can be uncoupled from the drive train (2) and is rotatable with respect to the same for biasing the spring accumulator (7), **characterized in that** a braking device (26) is provided for retarding and/or retaining the spring accumulator shaft (8) and/or the spring accumulator housing (9) against the spring bias in the uncoupled condition of the spring accumulator (7).

2. The rotor blade adjusting drive according to the preceding claim, wherein the spring accumulator (7) is formed to be tensionable when the spring accumulator shaft is engaged, in particular is tensionable by actuating the spring accumulator housing (9).

3. The rotor blade adjusting drive according to any of the preceding claims, wherein the spring accumulator housing (9) is rotatably mounted on a drive train support (16) by a pivot bearing (18).

4. The rotor blade adjusting drive according to the preceding claim, wherein releasable arresting means (23) are provided for arresting the spring accumulator housing (9) in at least one predetermined rotary position with respect to the drive train support (16).

5. The rotor blade adjusting drive according to the two preceding claims, wherein the braking device (26) is provided between the spring accumulator housing (9) and the drive train support (16).

6. The rotor blade adjusting drive according to the preceding claim, wherein the spring accumulator housing (9) preferably is seated on a pivot bearing ring (19) on the end face and the braking device (26) is disposed radially inside the pivot bearing ring (19), in particular engages the pivot bearing ring (19) and the spring accumulator housing (9).

7. The rotor blade adjusting drive according to any of the preceding claims, wherein the braking device (26) provides a braking force which is greater than a biasing force of the spring means (13) and smaller than a specifiable winding force for winding up the spring accumulator (7).

8. The rotor blade adjusting drive according to the preceding claims, wherein the braking device (26) constitutes a frictional brake, in particular a spring-biased frictional brake.

9. The rotor blade adjusting drive according to any of the preceding claims, wherein a winding drive (21) is provided for winding up the spring accumulator (7).

10. The rotor blade adjusting drive according to the preceding claim, wherein the winding drive (21) includes a drive means for rotatorily driving the spring accumulator housing (9) with respect to the drive train (2).

11. The rotor blade adjusting drive according to the preceding claim, wherein the drive means constitutes a rotary drive, which is mounted on the drive train support (2) and includes a drive wheel (30) engageable with the spring accumulator housing (9).

12. The rotor blade adjusting drive according to any of the preceding claims, wherein a winding condition monitoring means is provided for monitoring the winding condition of the spring accumulator (7).

13. The rotor blade adjusting drive according to the preceding claim, wherein the winding condition monitoring means includes a rotational angle and/or speed detecting means (32) for detecting the rotary position of the spring accumulator housing (9).

14. The rotor blade adjusting drive according to the two preceding claims, wherein the winding condition monitoring means is formed to be non-resettable.

15. The rotor blade adjusting drive according to any of the preceding claims, wherein the drive train (2) includes a drive motor (1) and a transmission (3) connectable with the drive motor (1), the spring accumulator (7) being connectable with a transmission element, in particular a transmission shaft (6) of the transmission (3).

16. The rotor blade adjusting drive according to the preceding claim, wherein the drive motor (1) is arranged transverse to a transmission shaft (6) of the transmission (3) and the spring accumulator shaft (8) of the spring accumulator (7) is arranged parallel, preferably coaxial to the transmission shaft (6).

17. The rotor blade adjusting drive according to the preceding claim, wherein the transmission shaft (6) includes an output element which can be brought in engagement with the rotor blade and/or the bearing member supporting the rotor blade.

18. The rotor blade adjusting drive according to any of the preceding claims, wherein a disengageable clutch (11) is provided between the spring accumulator shaft (8) and the drive train (2).

19. A wind power plant with a rotor blade adjusting drive according to any of the preceding claims.

## Revendications

1. Dispositif de réglage du pas de l'hélice destiné à régler l'angle de pas d'une pale de rotor d'une éolienne, comprenant une chaîne cinématique (2) qui peut être reliée côté sortie à la pale de rotor et/ou à une pièce de palier portant la pale de rotor, ainsi qu'un accumulateur à ressort (7) pouvant être relié à la chaîne cinématique (2), qui comporte un arbre d'accumulateur à ressort (8), un boîtier d'accumulateur à ressort (9) ainsi qu'un dispositif à ressort (13), qui peut être tendu par le déplacement angulaire de l'arbre d'accumulateur à ressort (8) et du boîtier d'accumulateur à ressort (9) l'un par rapport à l'autre, l'arbre d'accumulateur à ressort (8) et/ou le boîtier d'accumulateur à ressort (9) pouvant être découplé(s) de la chaîne cinématique (2) et tourner par rapport à celle-ci pour précontraindre l'accumulateur à ressort (7),
**caractérisé en ce**
**qu'**un dispositif de freinage (26) destiné à freiner et/ou arrêter l'arbre d'accumulateur à ressort (8) et/ou le boîtier d'accumulateur à ressort (9) contre la précontrainte du ressort est prévu à l'état découplé de l'accumulateur à ressort (7).

2. Dispositif de réglage du pas de l'hélice selon la revendication précédente, l'accumulateur à ressort (7) étant réalisé de façon à pouvoir être tendu, en particulier pouvant être tendu par l'actionnement du boîtier d'accumulateur à ressort (9), lorsque l'arbre d'accumulateur à ressort est embrayé.

3. Dispositif de réglage du pas de l'hélice selon l'une des revendications précédentes, le boîtier d'accumulateur à ressort (9) étant monté rotatif sur un support de chaîne cinématique (16) par le biais d'un palier de rotation (18).

4. Dispositif de réglage du pas de l'hélice selon la revendication précédente, des moyens de blocage (23) libérables destinés à bloquer le boîtier d'accumulateur à ressort (9) dans au moins une position de rotation prédéterminée par rapport au support de chaîne cinématique (16) étant prévus.

5. Dispositif de réglage du pas de l'hélice selon l'une des deux revendications précédentes, le dispositif de freinage (26) étant prévu entre le boîtier d'accumulateur à ressort (9) et le support de chaîne cinématique (16).

6. Dispositif de réglage du pas de l'hélice selon la revendication précédente, le boîtier d'accumulateur à ressort (9) logeant de préférence côté frontal sur une bague de palier de rotation (19) et le dispositif de freinage (26) étant disposé radialement à l'intérieur de la bague de palier de rotation (19), agissant en particulier sur la bague de palier de rotation (19) et le boîtier d'accumulateur à ressort (9).

7. Dispositif de réglage du pas de l'hélice selon l'une des revendications précédentes, le dispositif de freinage (26) mettant à disposition une force de freinage qui est supérieure à une force de précontrainte du dispositif à ressort (13) et inférieure à une force de remontage prédéfinissable pour remonter l'accumulateur à ressort (7).

8. Dispositif de réglage du pas de l'hélice selon l'une des revendications précédentes, le dispositif de freinage (26) étant réalisé sous forme de frein à friction, en particulier de frein à friction précontraint par ressort.

9. Dispositif de réglage du pas de l'hélice selon l'une des revendications précédentes, un entraînement de remontage (21) étant prévu pour remonter l'accumulateur à ressort (7).

10. Dispositif de réglage du pas de l'hélice selon la revendication précédente, l'entraînement de remontage (21) comportant un dispositif d'entraînement pour l'entraînement en rotation du boîtier d'accumulateur à ressort (9) par rapport à la chaîne cinématique (2).

11. Dispositif de réglage du pas de l'hélice selon la revendication précédente, le dispositif d'entraînement étant réalisé sous forme d'entraînement en rotation qui est logé sur le support de chaîne cinématique (2) et comporte une roue motrice (30) pouvant être amenée en prise avec le boîtier d'accumulateur à ressort (9).

12. Dispositif de réglage du pas de l'hélice selon l'une des revendications précédentes, un dispositif de surveillance de l'état de remontage étant prévu pour surveiller l'état de remontage de l'accumulateur à ressort (7).

13. Dispositif de réglage du pas de l'hélice selon la revendication précédente, le dispositif de surveillance de l'état de remontage comportant un dispositif de saisie de l'angle de rotation et/ou du nombre de tours (32) pour acquérir la position de rotation du boîtier d'accumulateur à ressort (9).

14. Dispositif de réglage du pas de l'hélice selon l'une des deux revendications précédentes, le dispositif de surveillance de l'état de remontage étant réalisé de manière non réinitialisable.

15. Dispositif de réglage du pas de l'hélice selon l'une des revendications précédentes, la chaîne cinématique (2) comportant un moteur de commande (1) ainsi qu'un engrenage (3) pouvant être relié au moteur de commande (1), l'accumulateur à ressort (7) pouvant être couplé avec un élément d'engrenage, en particulier un arbre d'engrenage (6) de l'engrenage (3).

16. Dispositif de réglage du pas de l'hélice selon la revendication précédente, le moteur de commande (1) étant disposé transversalement à un arbre d'engrenage (6) de l'engrenage (3) et l'accumulateur à ressort (7) étant disposé avec son arbre d'accumulateur à ressort (7) parallèle, de préférence coaxial, par rapport à l'arbre d'engrenage (6).

17. Dispositif de réglage du pas de l'hélice selon la revendication précédente, l'arbre d'engrenage (6) comportant un élément d'entraînement qui peut être amené en prise avec la pale de rotor et/ou la pièce de palier portant la pale de rotor.

18. Dispositif de réglage du pas de l'hélice selon l'une des revendications précédentes, un accouplement débrayable (11) étant prévu entre l'arbre d'accumulateur à ressort (8) et la chaîne cinématique (2).

19. Éolienne comprenant un dispositif de réglage du pas de l'hélice selon l'une des revendications précédentes.
